# EUROPÄISCHE PATENTANMELDUNG

(11) **EP 1 633 105 A1**
(43) Veröffentlichungstag der Anmeldung: **08.03.2006**
(21) Anmeldenummer: 05014928.5
(22) Anmeldetag: 09.07.2005
(51) Int. Cl.: H04L 29/06, A01B 79/00

(54) **Elektronisches Datenaustauschsystem**

(30) Priorität: 03.09.2004 DE 102004043169
(71) Anmelder: CLAAS Selbstfahrende Erntemaschinen GmbH, 33428 Harsewinkel (DE)
(72) Erfinder: Wippersteg, Heinz-Hermann, 32257 Bünde (DE); Steckel, Thilo, 33330 Gütersloh (DE)

(57) **Zusammenfassung**

Die Erfindung betrifft ein auf elektronischem Datenaustausch basierendes System (1) zur Beschaffung von Informationen (37,39) zur Abarbeitung von Prozessen (2), wobei die Beschaffung der Informationen (34) mittels zumindest einer Anwendung (24) erfolgt und die Anwendung (24) situationsbezogen Informationen (37,39) beschafft. Indem die Informationsbeschaffung (34) zur Abarbeitung von Prozessen (2) mittels zumindest einer Anwendung (24) erfolgt, die situationsbezogen Prozess- und Planungsdaten (38,39) bereitstellt, wird der Nutzer (27,40) des Informationsbeschaffungssystems (1) weitgehend von der qualifizieren Beschaffung der Informationen (39) entlastet. Die Informationen umfassen vorteilhafterweise Prozess- und Planungsdaten. Die Anwendung kann einer mobilen landwirtschaftlichen Arbeitsmachine und/oder einer stationären Einrichtung zugeordnet sein, und die Informationen können dabei landwirtschaftliche Prozesse steuern wie z.B. Betriebsparameteroptimierungen, Einsatzmanagement oder die Optimierung des Einsatzes von Hilfsstoffen wie Saatgut, Dünge- und Pflanzenschutzmittel sowie Treibstoffen.

## Beschreibung

Die Erfindung betrifft ein auf elektronischem Datenaustausch basierendes System nach dem Oberbegriff des Anspruchs 1.

Aus der DE 102 45 169 ist ein auf elektronischem Datenaustausch basierendes Kommunikationssystem bekannt geworden, in dem eine Vielzahl von Nutzern und Diensteanbietern miteinander kommunizieren. Dabei ist die Kommunikation so aufgebaut, dass der oder die Nutzer beispielsweise zur Optimierung von Betriebsparametern einer landwirtschaftlichen Erntemaschine spezielle Fragestellungen generieren, die dann über ein Kommunikationssystem von Diensteanbietern aufgegriffen und beantwortet werden. Dabei erkennen die verschiedenen Diensteanbieter die auf ihren Dienstleistungsumfang zutreffenden Fragestellungen selbsttätig, sodass der Betreiber der landwirtschaftlichen Arbeitsmaschine nur die ihn interessierenden Fragen generieren muss. Eine zielgerichtete Suche nach dem geeigneten Diensteanbieter oder die selbsttätige Beschaffung der erforderlichen Informationen entfällt durch Anwendung eines derartigen Kommunikationssystems vollständig. Die Diensteanbieter sind zudem so strukturiert, dass sie sich zur Beantwortung der generierten Fragestellungen ihrerseits weiterer Diensteanbieter bedienen, sodass beispielsweise dem Betreiber einer landwirtschaftlichen Arbeitsmaschine im Ergebnis dieses Informationsbeschaffungsprozesses präzise auf seinen Wissensbedarf abgestimmte Information durch den oder die Diensteanbieter verfügbar gemacht werden.

Ein derartig strukturiertes Informationsbeschaffungssystem erfordert ein Mindestmaß an fachlichen Kenntnissen des Nutzers, da dieser auf seinen Informationsbedarf abgestimmte Fragestellungen generieren muss. Dies erfordert umfassende Kenntnisse von dem jeweils zu optimierenden Prozess. Aufgrund dessen, dass landwirtschaftliche Arbeitsmaschinen zunehmend überbetrieblich eingesetzt und von sogenannten Lohnunternehmern bereitgestellt werden, ergibt sich das Problem, dass die Betreiber der landwirtschaftlichen Arbeitsmaschinen mitunter ständig auf unterschiedlichen landwirtschaftlichen Arbeitsmaschinen eingesetzt werden, sodass sie weder spezielle Kenntnisse von dem jeweiligen Maschinentyp noch von den Zusammenhängen zwischen den Betriebsparametern der landwirtschaftlichen Arbeitsmaschine, Erntegutparametern und den äußeren Randbedingungen, wie Hangneigung, Temperatur und Feuchtigkeit, haben.

Es ist deshalb Aufgabe der Erfindung ein auf elektronischem Datenaustausch basierendes System vorzuschlagen, welches die beschriebenen Nachteile des Standes der Technik vermeidet und insbesondere eine weitgehend von den Kenntnissen und Erfahrung eines einen Prozess organisierenden Nutzers losgelöste Prozessorganisation ermöglicht.

Diese Aufgabe wird erfindungsgemäß durch die kennzeichnenden Merkmale des Anspruchs 1 gelöst.

Indem die Beschaffung von Informationen zur Abarbeitung von Prozessen mittels zumindest einer Anwendung erfolgt, die situationsbezogen Informationen beschafft, wird der Nutzer des Informationsbeschaffungssystems weitgehend von der qualifizieren Beschaffung der Informationen entlastet.

In vorteilhafter Weiterbildung der Erfindung ist die Anwendung so ausgestaltet, dass sie selbst den erforderlichen Informationsbedarf ermittelt. Dies hat insbesondere den Vorteil, dass zur Optimierung oder Organisation von Prozessen sehr schnell der Informationsbedarf festgestellt werden kann. Zudem bietet ein solches System den Vorteil, dass unter Optimierungsgesichtspunkten Informationsverknüpfungen vorgenommen werden können, die ein Anwender nur mit großem Aufwand oder überhaupt nicht realisieren könnte.

Eine hohe Effizienz einer solchen Informationsbeschaffung wird dann erreicht, wenn die Anwendung selbsttätig die den Informationsbedarf bildenden Information beschafft.

Eine besonders effiziente Arbeitsweise der die Informationen beschaffenden Anwendung ergibt sich dann, wenn die Anwendung selbst einen geeigneten Diensteanbieter zur Bereitstellung des festgestellten Informationsbedarfs ermittelt und der Diensteanbieter der Anwendung die Informationen verfügbar macht und die Anwendung diese bereitgestellten Informationen weiterverarbeitet.

Damit der Datenaustausch zwischen den Anwendungen der Nutzer und den Diensteanbietern problemlos und unabhängig von speziellen Datenformaten erfolgen kann, basiert in vorteilhafter Weiterbildung der Erfindung die Kommunikation zwischen den Anwendungen der Nutzer und den Diensteanbietern auf standardisierten Web-Techniken.

Um die zwischen den Anwendungen der Nutzer und den Diensteanbietern auszutauschende Datenmenge zwecks schneller Prozessabläufe gering zu halten, beschränken sich in einer vorteilhaften Ausgestaltung die von der Anwendung zu beschaffenden Informationen auf Prozess- und Planungsdaten, die je nach Informationsbedarf zudem auf ergänzende Prozess- und Planungsdaten reduziert sein kann.

Um die Suche nach geeigneten Diensteanbietern zu verkürzen, kann in vorteilhafter Weiterbildung der Erfindung die Kommunikation so strukturiert sein, dass die Anwendung die den festgestellten Informationsbedarf bildenden Informationen unter einer vordefinierten Anzahl von Diensteanbietern beschafft. Zur Erhöhung der Qualität der zu beschaffenden Informationen oder unter Berücksichtigung der anfallenden Beschaffungskosten kann die Anwendung auch so ausgestaltet sein, dass sie selbsttätig geeignete weitere Diensteanbieter in die Kommunikation einbindet.

Zur Abarbeitung wiederkehrender Prozessabläufe kann die Anwendung auch so ausgestaltet sein, dass sie die für diese Prozessabläufe bereits beschafften oder vorhandenen Information dynamisch überprüft und, sofern erforderlich, neue, aktualisierte Informationen beschafft.

In vorteilhafter Weiterbildung der Erfindung kann die Anwendung auch so ausgestaltet sein, dass sie die generierten Prozesse oder Prozessabläufe weitern Nutzern verfügbar macht und/oder weitere Nutzer in das System zur Informationsbeschaffung einbindet. Letzteres hat insbesondere den Vorteil, dass die Mehrfachbeschaffung gleicher Informationen, wie dies häufig bei der Betriebsparametereinstellung landwirtschaftlicher Arbeitsmaschinen der Fall ist, entfallen kann.

Wegen der komplexen Abhängigkeiten in landwirtschaftlichen Anwendungsfällen ergibt sich eine besonders vorteilhafte Ausgestaltung der Erfindung, wenn die Anwendung einer mobilen und/oder stationären landwirtschaftlichen Einrichtung zugeordnet ist und die beschafften Informationen landwirtschaftliche Prozesse steuern. Eine besonders effiziente Ausgestaltung ergibt sich in diesem Zusammenhang dann, wenn der landwirtschaftliche Prozess Betriebsparameteroptimierungen landwirtschaftlicher Arbeitsmaschinen, das Einsatzmanagement für landwirtschaftliche Arbeitsmaschinen, das Managen komplexer Prozessabläufe und/oder die Optimierung des Hilfsstoffeinsatzes umfasst.

Erhebliche finanzielle Vorteile können sich für den Nutzer der Anwendung dann ergeben, wenn die Anwendung zur Optimierung des Einsatzes von Saatgut, Dünge- und Pflanzenschutzmitteln sowie zur Optimierung des Treibstoffbedarfes herangezogen wird.

Damit die Anwendung nur im Bedarfsfall aktiviert wird und nicht permanent Information beschafft und bereitstellt, kann vorgesehen sein, dass der Nutzer die Anwendung zunächst aktivieren muss. Im einfachsten Fall kann dies dadurch erfolgen, dass der Nutzer einen abzuarbeitenden Prozess auswählt und die Anwendung den Informationsbedarf zur Abarbeitung des vorgewählten Prozesses feststellt und die den Informationsbedarf bildenden Informationen selbsttätig beschafft.

In einer weiteren vorteilhaften Ausgestaltung der Erfindung kann das Datenaustauschsystem selbst Nutzer der erfindungsgemäßen Anwendung zur Beschaffung von situationsbezogenen Informationen für modulierte Abläufe sein. Dies hat insbesondere den Vorteil, dass damit global agierende Strukturen optimiert werden können. In diesem Fall fungiert das den Nutzer bildende Datenaustauschsystem als Prozesskettenmanager, wobei die Prozesskette beispielsweise von einem aus einer Vielzahl von Prozessketten aufgebauten modulierten Ablauf gebildet wird.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: eine schematische Darstellung des erfindungsgemäßen Datenaustauschsystems
- Figur 2: ein Flussbild der erfindungsgemäßen Informationsbeschaffung
- Figur 3: ein weiteres Flussbild einer globalen Anwendung des erfindungsgemäßen Informationsbeschaffungssystems

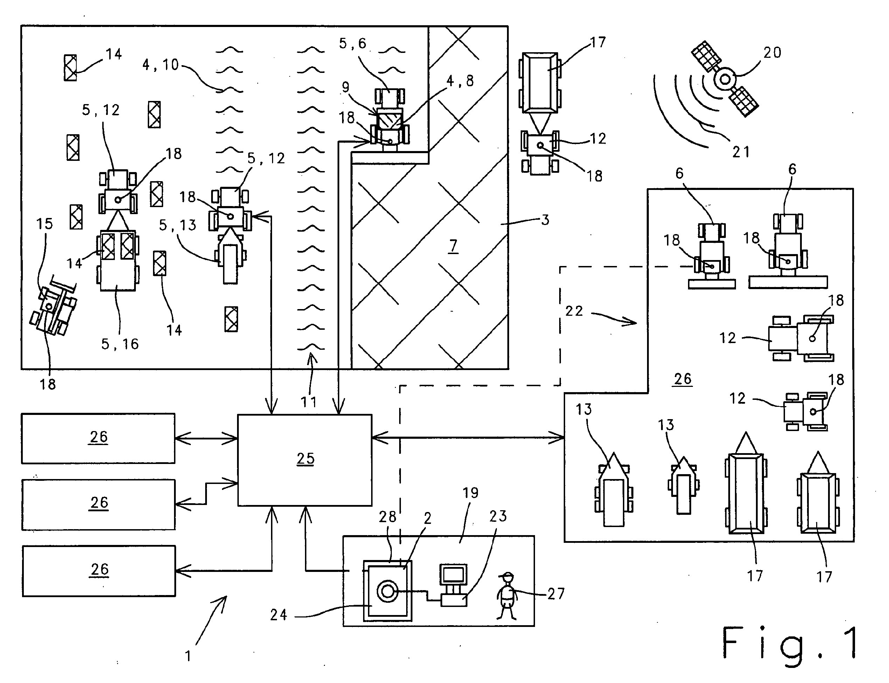

Figur 1 zeigt schematisch das erfindungsgemäß auf elektronischem Datenaustausch basierende Informationsbeschaffungssystem 1 am Beispiel eines landwirtschaftlichen Anwendungsfalles, nämlich der Planung der Prozesskette 2 ― Abernten einer Anbaufläche 3 und Bergung des Erntegutes 4 -. In der Regel wird diese Prozesskette 2 so abgearbeitet, dass zunächst ein oder mehrere als Mähdrescher 6 ausgeführte landwirtschaftliche Arbeitsmaschinen 5 den auf einer Anbaufläche 3 gewachsenen Bestand 7 abernten. Im dargestellten Ausführungsbeispiel werden der von den Fruchtständen 8 gebildete Teil des Erntegutes 4 auf dem Mähdrescher 6 in einem sogenannten Korntank 9 zwischengespeichert während der verbleibende Teil des Erntegutes 4, das Stroh 10, in Schwaden 11 auf der Anbaufläche 3 abgelegt wird. Hat das in Schwaden 11 abgelegte Stroh 10 einen die Einlagerung des Strohs 10 zulassenden Feuchtegehalt erreicht, verpresst eine von einem Schlepper 12 gezogene Ballenpresse 13 das Stroh 10 zu Erntegutballen 14, die zunächst auf der Anbaufläche 3 abgelegt werden. In einem weiteren Arbeitsgang der Prozesskette 2 werden die Erntegutballen 14 beispielsweise mittels sogenannter Hubstapler 15 auf von Schleppern 12 gezogene Pritschenanhänger 16 verladen und zur Einlagerung abtransportiert. In analoger Weise werden die im Korntank 9 zwischengespeicherten Fruchtstände 4 von schleppergezogenen Transportanhängern 17 übernommen und zur Einlagerung oder Weiterverarbeitung geführt. Moderne landwirtschaftliche Arbeitsmaschinen 5 verfügen zudem über Sende- und Empfangseinheiten 18 mittels derer sie in noch näher zu beschreibender Weise mit weiteren landwirtschaftlichen Arbeitsmaschinen 5 und/oder stationären Einrichtungen 19 in Kommunikation treten können, wobei die Sende- und Empfangseinheiten 18 in der Regel auch satellitengenerierte GPS-Signale 21 empfangen, die dann beispielsweise zur Generierung von Positionsdaten der jeweiligen landwirtschaftlichen Arbeitsmaschine 5 herangezogen werden.

Weiter zeigt Figur 1 einen Fuhrpark 22 der hier beispielhaft eine Vielzahl von Mähdreschern 6, Schleppern 12, Ballenpressen 13 und Transportanhängern 17 umfasst, wobei diese sich untereinander jeweils leistungsklassen- und herstellerabhängig unterscheiden können. Im einfachsten Fall reduzieren sich die Unterschiede, wie dargestellt, auf leistungsstärkere große und leistungsschwächere kleine Baureihen.

Die schematisch dargestellte stationäre Einrichtung 19 umfasst eine zentrale Recheneinheit 23, wobei der zentralen Recheneinheit 23 in noch näher zu beschreibender Weise die erfindungsgemäße Anwendung 24 zugeordnet ist. Die erfindungsgemäße Anwendung 24 kann über ein Datenaustauschsystem 25, beispielsweise das Inter-Net, mit den verschiedensten landwirtschaftlichen Arbeitsmaschinen 5, verschiedensten Diensteanbietern 26 sowie einem Fuhrpark 22, wobei dies der Fuhrpark 22 eines Lohnunternehmers sein könnte, kommunizieren.

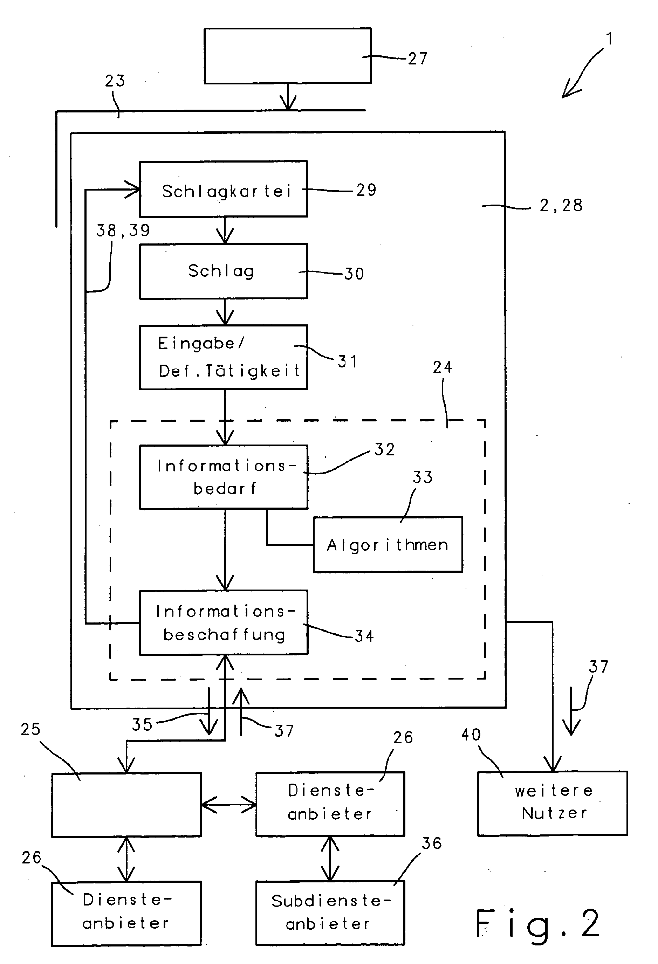

Zur Planung und Organisation des Einsatzes von Mähdreschern 6, Ballenpressen 13 und Bergefahrzeugen 12, 15-17 zur Bearbeitung einer Anbaufläche 3 kann ein Nutzer 27 die erfindungsgemäße Anwendung 24 in der Weise einsetzen, dass er zunächst in einer Recheneinheit 23 eine Prozedur 28 aktiviert, die der dargestellten Prozesskette 2 - Ernten und Bergen - entspricht. Die aktivierte Prozedur 28 ist ihrerseits mit der erfindungsgemäßen Anwendung 24 gekoppelt. Gemäß Figur 2 kann die die Prozesskette 2 - Ernten und Bergen - planende Prozedur 28 dadurch aktiviert werden, dass der Nutzer 27 in der Recheneinheit 23 eine Schlagkartei 29 aktiviert und in dieser zu dem, die zu bearbeitende Anbaufläche 3 repräsentierenden Schlag 30 navigiert. In einem weiteren Verfahrensschritt 31 kann der Nutzer 27 aufgefordert werden, die auf dem gewählten Schlag 30 auszuführenden Tätigkeiten zu definieren. Im Ausführungsbeispiel nach Figur 1, auf welches im Folgenden wiederkehrend Bezug genommen wird, umfasst dies das Ernten des Getreides und das Bergen des Erntegutes 4, hier der Körner und des Strohs. Mit Abschluss dieser Definitionen kann nun die erfindungsgemäße Anwendung 24 entweder selbsttätig oder durch den Nutzer 27 aktiviert werden. In einem ersten Verfahrensschritt prüft die aktivierte Anwendung 24 den zur Planung der jeweiligen Prozesskette 2 erforderlichen Informationsbedarf 32. Dies kann beispielsweise dadurch erfolgen, dass in diesem Verfahrensschritt 32 zunächst die in der Schlagkartei 29 bereits abgelegten Informationen von der erfindungsgemäßen Anwendung 24 erfasst werden. In Abhängigkeit von der jeweils zu planen Prozesskette 2 können der Anwendung 24 Algorithmen 33 zugeordnet sein, die die notwendigen und/oder eine Auswahl möglicher prozesskettenbezogener Informationen definieren. Indem die Anwendung 24 die bereits in der Schlagkartei 29 hinterlegten Informationen mit den durch die besagten Algorithmen 33 definierten prozesskettenbezogenen Informationen abgleicht, generiert die Anwendung 24 für die abzuarbeitende Prozesskette 2, 28 den Informationsbedarf 32. im einfachsten Fall umfasst der ermittelte Informationsbedarf 32 situationsbezogene Prozess- und Planungsdaten oder sofern bereits situationsbezogene Prozess- und Planungsdaten 38 vorliegen, kann sich der ermittelte Informationsbedarf 32 auch auf ergänzende Prozess- und Planungsdaten 38 beschränken.

In einem weiteren Verfahrenschritt leitet die erfindungsgemäße Anwendung 24 selbsttätig die Informationsbeschaffung 34 ein. Dies kann beispielsweise dadurch erfolgen, dass den ermittelten Informationsbedarf 32 codierende Fragestellungen 35 an ein Datenaustauschsystem 25 übergeben werden, wobei in das Datenaustauschsystem 25 sogenannte Diensteanbieter 26 eingebunden sind, deren Dienstleistung beispielsweise die nachfolgend noch näher beschriebene Beschaffung spezifischer Informationen umfasst. Bezüglich der Diensteanbieter 26 kann das Datenaustauschsystem 25 so strukturiert sein, dass nur eine ganz bestimmte Auswahl definierter Diensteanbieter 26 in das Datenaustauschsystem 25 eingebunden und von der erfindungsgemäßen Anwendung 24 kontaktierbar sind. Es liegt jedoch im Rahmen der Erfindung, dass die Einbindung der Diensteanbieter 26 beliebig und dynamisch ausbaubar ist, wobei dies beispielsweise dadurch erreicht wird, dass die erfindungsgemäße Anwendung 24 in Abhängigkeit von der zu planenden Prozesskette 2 diese dynamische Einbindung von Diensteanbietern 26 steuert. Weiter ist es möglich, dass die in das Datenaustauschsystem 25 eingebundenen Diensteanbieter 26 mit sogenannten Sub-Diensteanbietern 36 zur Informationsbeschaffung kommunizieren. Je nach Strukturierung der von der Anwendung 24 an das Datenaustauschsystem 25 übergebenen Fragestellungen 35 können diese entweder definiert an bestimmte Diensteanbieter 26 übermittelt werden oder der jeweilige Diensteanbieter 26 erkennt die von seinem Dienst bearbeitbare Fragestellung 35 selbsttätig und führt sie einer Abarbeitung zu.

Nach Abarbeitung der an das Datenaustauschsystem 25 übergebenen Fragestellungen 35 durch die jeweiligen Diensteanbieter 26, 36 werden der erfindungsgemäßen Anwendung 24 über das Datenaustauschsystem 25 Ergebnisdaten 37 übergeben und in der Anwendung 24 zu, den ermittelten Informationsbedarf 32 repräsentierenden Informationen 39 weiterverarbeitet. Gemäß dem dargestellten Ausführungsbeispiel bilden die Informationen 39 die prozess- und Planungsdaten 38 die sodann an die aktivierte Schlagkartei 29 zur Planung noch näher zu beschreibender Prozesse 2 übergeben werden. Damit die Kommunikation zwischen der erfindungsgemäßen Anwendung 24 und den verschiedensten Diensteanbietern 26, 36 problemlos erfolgen kann, basiert die in dem Datenaustauschsystem 25 stattfindende Kommunikation im einfachsten Fall auf standardisierten sogenannten Web-Techniken. In vorteilhafter Weiterbildung der Erfindung kann die Anwendung 24 auch so strukturiert sein, dass sie den Informationsbedarf 32 einer eine Prozesskette 2 planenden Prozedur 28 dynamisch prüft und erforderliche, zu aktualisierende Daten als Informationsbedarf 32 erkennt und in erfindungsgemäßer Weise selbsttätig mittels des Datenaustauschsystems 25 beschafft.

Wie bereits beschrieben zeigt Fig. 1 schematisch die Planung der Prozesskette Ernten ― Bergen 2 unter Zuhilfenahme der erfindungsgemäßen Anwendung 24. Ein Nutzer 27 aktiviert die in einer auf einer Recheneinheit 23 hinterlegten Prozedur 28 definierte Prozesskette 2, hier eine sogenannte Schlagkartei 29, innerhalb derer er zu dem die zu bearbeitende Anbaufläche 3 repräsentierenden Schlag 30 navigiert. Dabei können dem Schlag 30 bereits in der Recheneinheit 23 hinterlegte Informationen zugeordnet sein. Denkbar sind hier insbesondere Informationen über den Eigentümer des Schlages, etwa dessen Anschrift, und die Größe und Lage des Schlages. Es liegt jedoch im Rahmen der Erfindung, dass in der Recheneinheit 23 beliebige Informationen vorab hinterlegt sein können, die für die Abarbeitung einer bestimmten Prozedur 28 von Interesse sind. Beispielsweise könnten dies auch Informationen über einen fixen Maschinenbestand eines Fuhrparks 22 sein.

Zur Spezifizierung der zu planenden Prozesskette 2 wird der Nutzer 27 in einem weiteren Verfahrensschritt 31 zur Eingabe von Daten zur Beschreibung der Prozesskette 2 aufgefordert. Im vorliegenden Fall würde sich die Definition auf Ernten mittels Mähdrescher 6 und Bergen der Körner 8 und des Strohs 10 mittels Ballenpressen 13 und Transport- und Ladekapazitäten 12, 15-17 beschränken.

Nach dieser Eingabe erfolgt die Aktivierung der erfindungsgemäßen Anwendung 24, wobei diese, wie bereits beschrieben, zunächst den Informationsbedarf 32 zur Abarbeitung der aktivierten Prozesskette 2 ermittelt. Im vorliegenden Fall umfasst dies vor allem die Definition der einzusetzenden landwirtschaftlichen Arbeitsmaschinen 5. Hierfür kann sich die Anwendung 24 über das Datenaustauschsystem 25 mit einem Diensteanbieter 26 verbinden, der als sogenannter Lohnunternehmer einen Fuhrpark 22 mit verschiedensten landwirtschaftlichen Arbeitsmaschinen 5 betreibt. Die von der Anwendung 24 generierte Fragestellung 35 umfasst in diesem Zusammenhang die Anforderung geeigneter Mähdrescher 6, Ballenpressen 13, Pritschen- und Transportanhänger 16, 17 sowie der erforderlichen Anzahl an Schleppern 12.

Bezüglich der Auswahl der landwirtschaftlichen Arbeitsmaschinen 5 kann die Anwendung 24 beispielsweise unter Berücksichtigung des in der Schlagkartei 29 hinterlegten Bodenreliefs und der Geometrie sowie Größe des abzuerntenden Schlages 30 eine optimierte Auswahl verfügbarer Mähdrescher 6 zusammenstellen. Beispielsweise verlangt der Einsatz in hängigem Gelände sogenannte Hangmähdrescher 6 deren Arbeitsorgane die hangneigungsabhängige Schrägstellung des Mähdreschers 6 ausgleichen können. Bezüglich Geometrie und Größe des Schlages 30 muss sichergestellt sein, dass die Leistungsfähigkeit der auszuwählenden Maschinen mit der Schlaggröße und ihre Wendigkeit mit den geometrischen Verhältnissen des Schlages 30 korrespondieren. Zu geringe Leistungsfähigkeiten erhöhen die Erntedauer während zu hohe Leistungsfähigkeiten einem ökonomischen Einsatz der gewählten Mähdrescher 6 entgegenstehen. Die Anwendung 24 ist erfindungsgemäß so strukturiert, dass sie unter Berücksichtigung dieser Zusammenhänge den Bedarf an Mähdreschern 6 ermittelt und mittels des Datenaustauschsystems 25 über sogenannte Diensteanbieter 26 den Umfang an Mähdreschern 6 zusammenstellt. Es ist denkbar, dass die erforderlichen Mähdrescher 6 entweder von einem einzigen, einen Fuhrpark 22 betreibenden Lohnunternehmer oder einer Vielzahl von Lohnunternehmern gemeinschaftlich bereitgestellt werden. Zur weiteren Optimierung des zusammenzustellenden Maschinenparks kann entweder die Anwendung 24 selbst oder der jeweils eingebundene Diensteanbieter 26 weitere Optimierungskriterien definieren und die hierfür erforderlichen Informationen beschaffen. Auf das dargestellte Ausführungsbeispiel bezogen, kann dies beispielsweise die Beschaffung der auf dem zu bearbeitenden Schlag 30 herrschenden Bodenfeuchte sein, sodass bei der Zusammenstellung des Maschinenparks zudem die Befahrbarkeit des Schlages 30 und der sich ergebende Zugkraftbedarf berücksichtigt werden. Dies kann sogar soweit gehen, dass bei der Zusammenstellung des Maschinenparks unter dem Gesichtspunkt optimaler Bodendrücke auf die jeweils eingesetzten Fahrzeugreifen abgestimmte Reifendruckempfehlungen mittels des Datenaustauschsystems 25 von geeigneten Diensteanbietern 26 beschafft werden.

Weiter kann die Anwendung 24 oder der jeweils angesprochene Diensteanbieter 26 so strukturiert sein, dass diese unter Berücksichtigung der Spezifik des zu bearbeitenden Schlages 30, den Ernteguteigenschaften sowie den klimatischen Bedingungen maschinenspezifische Einstellparameter als Ergebnisdaten 37 beschaffen, die eine an die jeweiligen Ernte- und Arbeitsbedingungen optimal angepasste Einstellung verschiedenster Arbeitsorgane der ausgewählten landwirtschaftlichen Arbeitsmaschinen 5 ermöglicht. Weiter können die bereitgestellten Ergebnisdaten 37 eine Optimierung des gleichzeitigen oder aufeinanderfolgenden Einsatzes des gewählten Maschinenparks unter zeitlichen Gesichtspunkten umfassen. Dies hat insbesondere den Vorteil, dass auf diese Weise die Logistik des Ernteprozesses optimierbar wird. Indem die Ergebnisdaten 37 zugleich das Zusammenspiel mehrerer landwirtschaftlicher Arbeitsmaschinen 5 innerhalb einer oder mehrerer Prozessketten 2 umfasst, bilden die Ergebnisdaten 37 zugleich Prozess- und Planungsdaten 38 mittels derer ganze Prozessabläufe vorab geplant und optimiert werden können. Dies hat insbesondere den Vorteil, dass bereits im Vorfeld von abzuarbeitenden Arbeitsabläufen unter dem Gesichtspunkt der Sicherstellung einer hohen Wirtschaftlichkeit Stillstands-, Warte- und Einstellzeiten minimierbar sind. Damit nun die ermittelten Prozess- und Planungsdaten 38 den in eine Prozesskette 2 eingebundenen weiteren Nutzern 40, welche unter anderem die Fahrer der verschiedensten landwirtschaftlichen Arbeitsmaschinen 5 sein können, verfügbar sind, kann die erfindungsgemäße Anwendung 24 zudem so strukturiert sein, dass sie die ermittelten Prozess- und Planungsdaten 38 an die weiteren Nutzer 40 übermittelt und/oder die weiteren Nutzer 40 automatisch in das Datenaustauschsystem 25 einbindet. Damit nun eine breite Kommunikation zwischen verschiedensten Nutzern 27, 40 und Diensteanbietern 26 in einem Datenaustauschsystem 25 möglich wird, kann die erfindungsgemäße Anwendung 24 sowohl auf verschiedensten mobilen Einrichtungen 5 als auch in zentralen stationären Einrichtungen 19 hinterlegt und betreibbar sein.

In nicht dargestellter Weise kann die mittels der erfindungsgemäßen Anwendung 24 zu optimierende Prozesskette 2 auch die Optimierung des Einsatzes sogenannter Hilfsstoffe, wie etwa den Einsatz von Dünge- und Pflanzenschutzmitteln, den Einsatz von Saatgut sowie den Verbrauch von Treibstoff umfassen.

Damit die Optimierung bestimmter Prozessabläufe nur im Bedarfsfall vorgenommen wird, muss der Nutzer 27, 39 die die erfindungsgemäße Anwendung 24 umfassende Prozedur 28 starten. Es ist jedoch auch möglich, dass sich die jeweilige Prozedur 28 selbsttätig aktiviert. Dies ist insbesondere bei der Optimierung von Einstellparametern der Arbeitsorgane einer landwirtschaftlichen Arbeitsmaschine 5 von besonderer Bedeutung, da diese regelmäßig in Abhängigkeit von den Eigenschaften des Erntegutes und den Witterungsbedingungen ganz erheblich schwanken können und der Betreiber der landwirtschaftlichen Arbeitsmaschine 5 diese Schwankungen nicht in jedem Fall selbst feststellen kann.

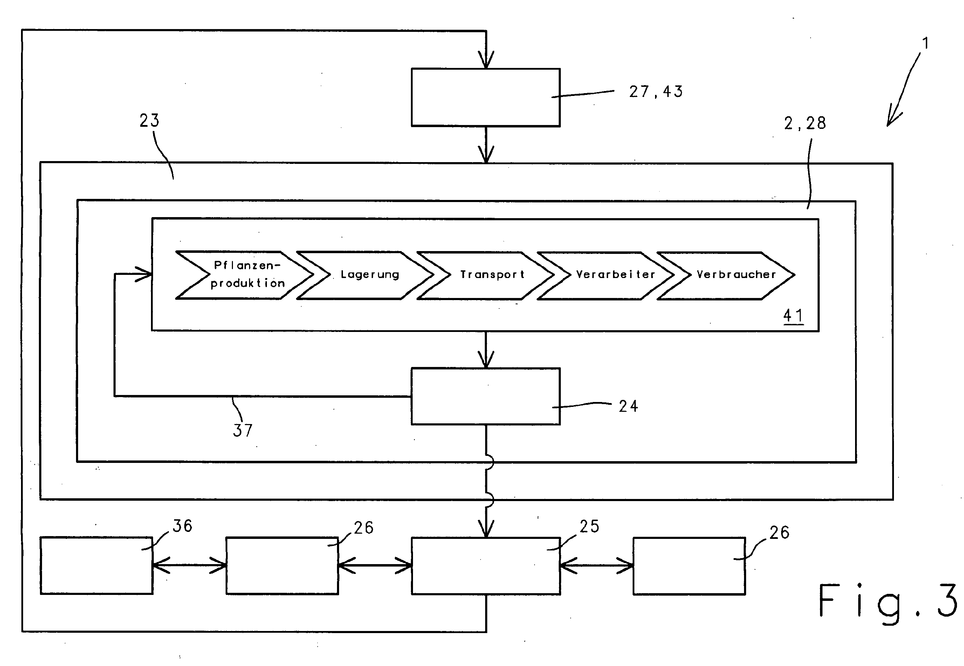

Gemäß Figur 3 kann das erfindungsgemäße Informationsbeschaffungssystem 1 auch so strukturiert sein, dass die mittels einer Prozedur 28 ansteuerbare Prozesskette 2 einen modulierten Ablauf 41 bildet, der sich aus einer Vielzahl einzelner Prozessketten 42 zusammensetzen kann. Dieser auch als globale Prozesskette 2 bezeichenbare modulierte Ablauf 41 steht in Wirkverbindung mit der erfindungsgemäßen Anwendung 24, die in der bereits beschriebenen Weise den Informationsbedarf 32 des modulierten Ablaufs 41 ermittelt und die erforderlichen Ergebnisdaten 37 beschafft. Die Beschaffung dieser Ergebnisdaten 37 erfolgt in analoger Weise mittels des Datenaustauschsystems 25 sowie den eingebundenen oder einzubindenden Diensteanbietern 26 und den diesen zugeordneten Sub-Diensteanbietern 36. Indem der modulierte Ablauf 41 beispielsweise die separaten Prozessketten 42 Pflanzenproduktion - Lagerung - Transport - Verarbeitung - Verbraucher umfasst, wird mittels einer derart strukturierten globalen Prozesskette 2, 41 der vollständige Ablaufzyklus landwirtschaftlicher Produktionsprozesse abgebildet. Damit dieser umfangreiche Prozess mittels der erfindungsgemäßen Anwendung 24 effizient optimiert werden kann, kann das Datenaustauschsystem 25 selbst der Nutzer 27 des Informationsbeschaffungssystems 1 sein. Dies lässt sich am einfachsten dadurch erreichen, dass das Datenaustauschsystem, zum Beispiel das Internet, die Funktion eines globalen Prozesskettenmanagers 43 übernimmt und in dieser virtuellen Funktion als Nutzer der erfindungsgemäßen Anwendung 24 zur Optimierung der globalen Prozesskette 41 fungiert.

Es liegt im Rahmen des Könnens eines Fachmanns das beschriebene Datenaustauschsystem 25 in nicht dargestellter Weise abzuwandeln oder in anderen als den dargestellten Anwendungsfällen einzusetzen, um die beschriebenen Effekte zu erzielen, ohne dabei den Rahmen der Erfindung zu verlassen.

### Bezugszeichenliste:

- 1: Informationsbeschaffungssystem
- 2: Prozesskette
- 3: Anbaufläche
- 4: Erntegut
- 5: Landwirtschaftliche Arbeitsmaschine
- 6: Mähdrescher
- 7: Bestand
- 8: Fruchtstände
- 9: Korntank
- 10: Stroh
- 11: Schwad
- 12: Schlepper
- 13: Ballenpresse
- 14: Erntegutballen
- 15: Hubstapler
- 16: Pritschenanhänger
- 17: Transportanhänger
- 18: Sende- und Empfangseinheit
- 19: stationäre Einrichtung
- 20: Satellit
- 21: GPS-Signal
- 22: Fuhrpark
- 23: Recheneinheit
- 24: Anwendung
- 25: Datenaustauschsystem
- 26: Diensteanbieter
- 27: Nutzer
- 28: Prozedur Prozesskette
- 29: Schlagkartei
- 30: Schlag
- 31: weiterer Verfahrensschritt
- 32: Informationsbedarf
- 33: Algorithmus
- 34: Informationsbeschaffung
- 35: Fragestellung
- 36: Sub-Diensteanbieter
- 37: Ergebnisdaten
- 38: Prozess- und Planungsdaten
- 39: Informationen
- 40: weitere Nutzer
- 41: modulierter Ablauf
- 42: Prozesskette
- 43: Prozesskettenmanager

## Patentansprüche

1. Auf elektronischem Datenaustausch basierendes System zur Beschaffung von Informationen zur Abarbeitung von Prozessen,
**dadurch gekennzeichnet,**
**dass** die Beschaffung der Informationen (34) mittels zumindest einer Anwendung (24) erfolgt und die Anwendung (24) situationsbezogen Informationen (37, 39) beschafft.

2. Auf elektronischem Datenaustausch basierendes System nach Anspruch 1,
**dadurch gekennzeichnet,**
**dass** die Anwendung (24) den Informationsbedarf (32) des Prozesses (2) ermittelt.

3. Auf elektronischem Datenaustausch basierendes System nach einem der vorhergehenden Ansprüche,
**dadurch gekennzeichnet,**
**dass** die Anwendung (24) die Informationen (37, 39) selbsttätig beschafft.

4. Auf elektronischem Datenaustausch basierendes System nach einem der vorhergehenden Ansprüche,
**dadurch gekennzeichnet,**
**dass** die Beschaffung der Informationen (37, 39) in der Weise erfolgt, dass die Anwendung (24) einen geeigneten Diensteanbieter (26) ermittelt und der Diensteanbieter (26) der Anwendung (24) die Informationen (37) verfügbar macht und die Anwendung (24) die Informationen (37, 39) weiterverarbeitet.

5. Auf elektronischem Datenaustausch basierendes System nach einem der vorhergehenden Ansprüche,
**dadurch gekennzeichnet,**
**dass** der Datenaustausch mittels standardisierter Web-Techniken erfolgt.

6. Auf elektronischem Datenaustausch basierendes System nach einem der vorhergehenden Ansprüche,
**dadurch gekennzeichnet,**
**dass** die Informationen (39) Prozess- und Planungsdaten (38) umfassen und wobei die Prozess- und Planungsdaten (38) auch auf ergänzende Prozess- und Planungsdaten (38) beschränkt sein können.

7. Auf elektronischem Datenaustausch basierendes System nach einem der vorhergehenden Ansprüche,
**dadurch gekennzeichnet,**
**dass** die Anwendung (24) unter verabredeten Diensteanbietern (26) navigiert.

8. Auf elektronischem Datenaustausch basierendes System nach einem der vorhergehenden Ansprüche,
**dadurch gekennzeichnet,**
**dass** die Anwendung (24) selbsttätig geeignete Diensteanbieter (26) in das System zur Informationsbeschaffung (25) einbindet.

9. Auf elektronischem Datenaustausch basierendes System nach einem der vorhergehenden Ansprüche,
**dadurch gekennzeichnet,**
**dass** die Anwendung (24) bestehende Informationen dynamisch prüft und neue Informationen (37, 39) selbsttätig beschafft.

10. Auf elektronischem Datenaustausch basierendes System nach einem der vorhergehenden Ansprüche,
**dadurch gekennzeichnet,**
**dass** die Anwendung weitere Nutzer (40) in das System zur Informationsbeschaffung (25) einbindet und/oder weiteren Nutzern (40) die generierten Informationen (39) verfügbar macht.

11. Auf elektronischem Datenaustausch basierendes System nach einem der vorhergehenden Ansprüche,
**dadurch gekennzeichnet,**
**dass** die Anwendung (24) wenigstens einer mobilen landwirtschaftlichen Arbeitsmaschine (5) und/oder zumindest einer stationären Einrichtung (19) zugeordnet ist und die Informationen (39) landwirtschaftliche Prozesse (2) steuern.

12. Auf elektronischem Datenaustausch basierendes System nach Anspruch 11,
**dadurch gekennzeichnet,**
**dass** der landwirtschaftliche Prozess (2) Betriebsparameteroptimierungen landwirtschaftlicher Arbeitsmaschinen (5), das Einsatzmanagement für landwirtschaftliche Arbeitsmaschinen (5), das Managen komplexer Prozessabläufe und die Optimierung des Hilfsstoffeinsatzes umfassen kann.

13. Auf elektronischem Datenaustausch basierendes System nach Anspruch 12,
**dadurch gekennzeichnet,**
**dass** die Hilfsstoffe Saatgut, Dünge- und Pflanzenschutzmittel sowie Treibstoffe umfassen.

14. Auf elektronischem Datenaustausch basierendes System nach einem der vorhergehenden Ansprüche,
**dadurch gekennzeichnet,**
**dass** die Anwendung (24) von einem Nutzer (27, 40) aktiviert wird.

15. Auf elektronischem Datenaustausch basierendes System nach Anspruch 14,
**dadurch gekennzeichnet,**
**dass** der Nutzer (27) von dem Datenaustauschsystem (25) gebildet wird und die Anwendung (24) die situationsbezogenen Informationen (37, 39) einem modulierten Ablauf (41) verfügbar macht.

16. Auf elektronischem Datenaustausch basierendes System nach einem der vorhergehenden Ansprüche,
**dadurch gekennzeichnet,**
**dass** der modulierte Ablauf (41) aus einer Vielzahl von Prozessketten (42) gebildet wird.

17. Auf elektronischem Datenaustausch basierendes System nach einem der vorhergehenden Ansprüche,
**dadurch gekennzeichnet,**
**dass** das Datenaustauschsystem (25) als Prozesskettenmanager (43) eines modulierten Ablaufes (41) fungiert.

18. Auf elektronischem Datenaustausch basierendes System nach einem der vorhergehenden Ansprüche,
**dadurch gekennzeichnet,**
**dass** der Nutzer (27, 40, 25) einen definierten Prozess (2) auswählt und die Anwendung (24) den Informationsbedarf (32) zur Abarbeitung des vorgewählten Prozesses (2) feststellt und die den Informationsbedarf (32) bildenden Informationen (37, 39) selbsttätig beschafft.
